Europäisches Patentamt

European Patent Office

Office européen des brevets

(11) Numéro de publication: **0 189 720**
**B1**

# (12) FASCICULE DE BREVET EUROPEEN

(45) Date de publication du fascicule du brevet:
**24.05.89**

(21) Numéro de dépôt: **85402652.3**

(22) Date de dépôt: **30.12.85**

(51) Int. Cl.⁴: **F 16 L 59/02, F 16 L 59/06**

(54) Nouveau matériau isolant thermique, du type syntactique, à base d'élastomères notamment, partiellement ou totalement ininflammable.

(30) Priorité: **31.12.84 FR 8420101**

(43) Date de publication de la demande:
**06.08.86 Bulletin 86/32**

(45) Mention de la délivrance du brevet:
**24.05.89 Bulletin 89/21**

(84) Etats contractants désignés:
**AT BE CH DE FR GB IT LI LU NL SE**

(56) Documents cités:
**EP-A- 0 073 638**
**EP-A- 0 073 688**
**US-A- 3 935 632**

(73) Titulaire: **HUTCHINSON S.A., 2 rue Balzac, F-75008 Paris (FR)**

(72) Inventeur: **Bodin, Françoise C. B., 8, rue de la République Jallans, F-28200 Chateaudun (FR)**
Inventeur: **Bernard, Jean-Jacques, 13, Avenue Georges Clémenceau, F-94360 Bry Sur Marne (FR)**

(74) Mandataire: **Ores, Irène et al, CABINET ORES 6, Avenue de Messine, F-75008 Paris (FR)**

ACTORUM AG

## Description

La présente invention est relative à un nouveau matériau isolant thermique, du type syntactique et à base d'élastomères notamment, pouvant être rendu partiellement ou totalement ininflammable, suivant les besoins. A partir de ce matériau on peut réaliser une vaste gamme de produits utilisables dans de nombreux domaines, comme il sera précisé plus loin.

Dans le domaine plus général des matériaux d'isolation thermique, on connaît en particulier des produits dérivés de la chimie de la silice.

Un premier produit est constitué par les microbilles de verre, qui sont de minuscules sphères parfaites – pleines ou creuses – dont le diamètre est compris entre environ 50 μm et 200 μm.

D'autres produits dérivés de la chimie de la silice sont constitués par les élastomères de silicones, dont on connaît les propriétés de tenue à la température – ils peuvent être exposés en continu à une température de 200 à 250 °C – ainsi que leur capacité d'accepter de nombreuses charges. Cependant, les élastomères présentent des inconvénients importants qui sont représentés par leur forte conductivité thermique et une faible tenue au feu (la combustion s'effectue sans dégagement de gaz toxiques): malheureusement, la découverte récente de l'action inhibitrice de la combustion exercée par des sels de métaux précieux n'a permis d'éliminer cet inconvénient que pour certains types d'élastomères seulement.

Des essais ont été faits pour charger des élastomères de silicone solides de microbilles creuses, dans le but d'obtenir un produit qui allie aux propriétés des élastomères, les propriétés intrinsèques des microbilles creuses, à savoir:

– leurs excellentes propriétés d'isolation thermique (ainsi qu'électrique) dues à l'air qu'elles contiennent,

– leur faible densité, et

– leur relativement haute résistance à l'écrasement,toute en profitant de leur inertie chimique et de leur bon comportement d'écoulement aux mélanges dans lesquels elles sont introduites.

Toutefois, les techniciens se heurtent à l'impossibilité physique de réaliser un mélange entre des élastomères de silicones (solides) et des microbilles de verre creuses, qui sont brisées dans une grande proportion par les forces de cisaillement s'exerçant au contact entre les cylindres de mélangeage, ce qui détruit la spécificité de ce type de charge, pourtant très intéressant.

Il est vrai qu'on connaît déjà des matériaux syntactiques se composant de microbilles de verre creuses distribuées dans une matrice qui est liquide à température ambiante, notamment constituée par une résine époxy ou polyuréthanne; toutefois, ces matériaux sont essentiellement des matériaux d'allègement (leur densité relative est inférieure à 1) de structures devant être soumises à des hautes pressions, en particulier de structures destinées à être posées sur le fond de la mer.

Certes, le Brevet US-A-3 935 632 illustre un exemple d'utilisation comme matériaux d'isolation, toutefois, il s'agit dans ce cas de matériaux ne présentant aucune souplesse et résistant à des températures très limitées, telles que 150 °C.

Il sont, en outre, réalisés in situ par coulage, à savoir suivant un procédé qui évite de soumettre les microbilles creuses, noyées dans la matrice de résine époxy, à des manipulations qui risquent de les briser, renonçant donc au mélangeage à l'aide de cylindres à cause des difficultés signalées plus haut.

De façon plus précise, le Brevet américain précité concerne un procédé d'isolation d'une conduite, notamment sous-marine, destinée à être posée sur le fond de la mer pour le transport de fluides, tels que pétrole ou gaz, à partir d'installations de forage et à maintenir le fluide transporté à une température telle qu'on puisse éviter que celui-ci se gélifie, permettant ainsi son écoulement.

Ce procédé consiste essentiellement à:

– disposer une chemise en un matériau de densité élevée, tel que du ciment, autour de la conduite à isoler, tout en laissant un espace annulaire entre cette conduite et la chemise, et

– remplir cet espace d'un matériau isolant comprenant une résine époxy et une charge en matière poreuse, telle que des microbilles vides ou des particules de mousse à cellules fermées.

De plus, lorsque le produit final doit allier aux propriétés d'isolation thermique et de résistance à la température, des propriétés d'ignifugation – qui sont souvent recherchées pour des matériaux isolants thermiques – les techniciens sont fortement limités dans le choix du système d'ignifugation. qui doit être à la fois résistant à la flamme et auto-extinguible dans une large gamme de températures, et qui ne doit développer ni fumées, ni gaz toxiques (c'est, par exemple, en raison de cette dernière exigence que les composés chlorés et bromés associés à l'oxyde d'antimoine doivent être écartés, de même que certains dérivés halogénés qui provoquent une inhibition partielle ou totale du catalyseur), en sorte qu'il n'existe pas actuellement de matériaux isolants, notamment du type syntactique et en particulier à base de microbilles de verre creuses, qui allient à la propriété d'isolation thermique:

– les propriétés de résistance à des températures très élevées, telles qu'autour de 600 °C et même plus, (la propriété de résistance aux températures est entendue dans le sens de conservation de la propriété d'isolation thermique à ces températures élevées),

– et de souplesse et de rigidité variables suivant le type d'application,

– et/ou d'ininflammabilité (partielle ou totale).

La présente invention a en conséquence pour but de pourvoir à un matériau isolant thermique qui répond mieux aux nécessités de la pratique que les matériaux visant au même but antérieurement connus, notamment en ce que:

– sa conductivité thermique $\lambda$ est très faible,

– il se présente sous forme de matériau souple ou rigide, dont le degré de souplesse ou de rigidité, respectivement, est variable en fonction des applications,

– s'il est ignifugé, il conserve ses propriétés de résistance au feu, ainsi que ses propriétés d'isolation thermique, jusqu' à 600 °C et plus,

– il est transformable et usinable avec du matériel couramment utilisé dans l'industrie,

– il permet de réaliser en particulier des revêtements assurant, d'une part la protection cinétique (à savoir contre le frottement dans un milieu fluide, notamment l'air, et donc contre l'échauffement, même à grande vitesse, telle que 3 000 Km/h) et d'autre part, la protection ablative (à savoir, contre la perte progressive de substance, notamment par érosion mécanique),

– il permet d'obtenir une vaste gamme de produits isolants composites par association avec des fibres, des tissus, etc ... s'adaptant aux besoins pratiques.

La présente invention a pour objet un matériau d'isolation thermique du type syntactique, comportant une charge de microbilles de verre creuses distribuées dans une matrice à base d'une matière liquide à l'état initial, à savoir, avant réticulation, et à la température ambiante, et destiné à être utilisé à des température ambiante, et destiné à être utilisé à des températures au moins 400 °C, caractérisé en ce que la matrice liquide, qui sert de liant pour ladite charge de microbilles creuses, est constituée par un élastomère ou une résine de silicones utilisés tels quels, à savoir sans solvant, suivant que l'on désire après réticulation un produit final solide souple ou rigide, respectivement, le degré de souplesse et de rigidité étant dans les deux cas de produit souple et de produit rigide, respectivement, fonction de la proportion de la charge de microbilles creuses présente dans le mélange.

Selon un mode de réalisation avantageux du matériau conforme à l'invention, le mélange d'élastomère ou résine de silicones et de microbilles de verre comporte une charge additionelle, présente en proportion également déterminée, constituée par un composé ignifugeant en poudre contenant de l'eau liée, tel que les hydrates d'alumine et les borates, lequel produit ignifugeant est capable d'assurer l'ignifugation partielle ou totale, selon le dosage, du matériau qui le contient, tout en lui permettant de conserver ses propriétés isolantes jusqu'à une température d'au moins 600 °C.

On obtient ainsi toute une gamme de produits qui, allant du plus souple au plus rigide, présentent tous le même comportement de base en termes d'ininflammabilité et/ou de résistance aux températures élevées.

Selon un autre mode de réalisation avantageux du matériau conforme à l'invention, ledit mélange comporte une charge supplémentaire en proportion appropriée, constituée par des fibres minérales, telles que les fibres de verre, de silice ou d'alumine, ou organiques, telles que les fibres de carbone.

Outre les dispositions qui précèdent, l'invention comprend encore d'autres dispositions qui ressortiront de la description qui va suivre.

L'invention vise plus particulièrement un matériau isolant thermique, souple ou rigide, résistant aux hautes températures et ininflammable jusqu'à 600 °C et même plus, les revêtements de protection thermique, notamment cinétique et ablative, sous forme de panneaux ou de pièces moulées réalisées à l'aide de ce matériau, ainsi que les produits composites, homogènes ou stratifiés, obtenus par coopération du matériau conforme à l'invention avec des fibres, des tissus et tout élément approprié se présentant notamment sous forme de feuille, mat, molleton, buvard ou autre.

L'invention sera mieux comprise à l'aide du complément de description qui va suivre, qui se réfère aux opérations de mélangeage et à des exemples de réalisation du matériau isolant conforme à l'invention qui indiquent de manière non limitative les proportions avec lesquelles les différents composants entrent dans le mélange.

Le procédé de préparation du matériau isolant syntactique selon l'invention comporte nécessairement les étapes fondamentales suivantes:

– mélangeage en proportions adéquates d'un élastomère ou d'une résine de silicones, se présentant à l'état cru et à température ambiante sous forme liquide, avec son catalyseur jusqu'à homogénéisation parfaite, et

– incorporation d'une charge, en proportion déterminée, de microbilles de verre, notamment creuses, au mélange ainsi obtenu, le temps de mélangeage nécessaire pour obtenir également dans cette deuxième étape une homogénéisation parfaite étant fonction de la quantité de microbilles.

Le choix d'un élastomère de silicones ou d'une résine de silicones liquides permet de réaliser, dans chaque cas, un mélangeage non destructif des microbilles de verre creuses et d'obtenir un matériau souple ou rigide, respectivement.

Comme exemple non limitatif en particulier de résine de silicones se présentant à température ambiante sous forme liquide, on a employé en polysiloxane sans solvant, de basse viscosité et durcissable à chaud grâce à un catalyseur composé d'une base polysiloxane qui agit par addition sur les radicaux Si-vinyl de la résine en présence de sels de platine.

La présence d'un inhibiteur de la réaction de catalyse prolonge la durée de vie en pot (pot-life), en vue de la mise en œuvre du mélange, jusqu'à environ trois mois à température ambiante, ce qui permet d'effectuer le stockage du mélange à l'état cru – avant réticulation – en prenant le minimum de précautions.

En ce qui concerne le temps de mélangeage de la résine avec son catalyseur, il dépend essentiellement de la quantité de matière en présence et ne peut pas être inférieur à 30 secondes; il est aussi fonction de la viscosité de la résine employée.

En ce qui concerne le temps de mélangeage en présence de la charge de microbilles il est fonction – comme déjà dit plus haut – de la quantité de ces dernières: or, cette quantité détermine également l'aspect final du mélange qui varie de l'état liquide visqueux et coulable, à l'état sableux.

Etant donné qu'après un stockage défectueux les microbilles peuvent être plus ou moins agglomérées et qu'on ne doit pas tolérer la présence d'agglomérats – parce que ces derniers rendent le matériau final non homogène – il est avantageux de prendre la précaution de sécher la charge de microbilles en étuve à 80 °C–100 °C et de la tamiser ensuite. (Une charge filtrée présente une meilleure fluidité, donc un écoulement facile et régulier dans les enceintes de mélangeage, parce que le tamisage contribue à éliminer, en coopération avec le séchage, les éventuels agglomérats). Il va de soi que cette précaution doit être prise également pour les autres charges, notamment pour la charge d'ignifugeant, à laquelle on fait référence ci-après.

Dans le cas où on veut rendre le matériau isolant conforme à la présente invention également ininflammable, on introduit en fait une charge additionnelle de produit ignifugeant sitôt l'étape de mélangeage entre le produit de base (élastomère ou résine) et son catalyseur terminée, donc avant l'incorporation de la charge de microbilles de verre creuses, de manière à assurer une distribution uniforme du produit ignifugeant à l'intérieur de la masse du mélange.

Dans certaines applications, il est avantageux d'introduire dans le mélange, ignifugé ou non et déjà chargé de microbilles, une charge supplémentaire de fibres appropriées dont la proportion est choisie en tenant compte que les fibres augmentent la viscosité du mélange.

Des exemples non limitatifs de fibres utilisables dans le cadre de la présente invention sont constitués par des fibres minérales, telles que les fibres de verre, de silice ou d'alumine, ou des fibres organiques, telles que les fibres de carbone: d'une façon générale, la charge supplémentaire de fibres est choisie de manière à améliorer les propriétés mécaniques du matériau isolant selon l'invention et/ou accroître les déjà exceptionnelles propriétés d'isolation thermique de ce matériau.

Dans le cas où, au lieu d'une résine de silicones, on utilise un élastomère de silicone – lui aussi sous forme liquide – les considérations développées plus haut pour les résines restent encore valables avec en particulier la différence suivante constituée par le fait que la matrice élastomère a une viscosité beaucoup plus élevée.

Les qualités du matériau isolant souple (à base d'élastomères de silicones) ainsi obtenu sont voisines de celles du matériau rigide (à base de résines de silicones), et le produit ignifugeant est identique dans les deux cas, son dosage étant fonction de la norme de sécurité à laquelle le produit final est censé répondre et des propriétés mécaniques recherchées.

Dans chaque cas, il faut respecter les conditions indiquées ci-après, non seulement pour les produits de base (élastomères ou résines), mais aussi pour les amalgames à l'état cru:
– absence de pollution par des produits aminés, soufrés, azotés et dérivés, qui peuvent empoisonner la réaction de catalyse à base de sels de platine (donc, pour limiter les risques d'inhibition des catalyseurs),

– conditions hygrométriques minimales,
– absence de lumière (dans la mesure du possible).

La faible viscosité des résines et des élastomères employés dans le cadre de la présente invention, permet aux charges, notamment de microbilles de verre et d'ignifugeant, d'être parfaitement mouillées et de dépenser une énergie relativement faible au mélangeage; de plus, étant donné que la viscosité diminue quand la température augmente, le mélange chargé a – avant le début de la gélification – de bonnes propriétés d'écoulement: ceci permet d'envisager le moulage en couche épaisse sans problème de soufflage (il va de soi que les pressions de moulages doivent être faibles, pour ne pas détruire les microbilles de verre creuses, et que les paramètres de temps et de température sont à optimiser de façon à ce que le fluage du mélange soit compatible avec l'exigence de remplissage des moules: dans le cas d'une résine la température minimum de réticulation est de 170 °C pendant 1 heure, tandis que dans le cas d'un élastomère la température minimum est de 150 °C pendant 30 minutes).

En particulier, les amalgames obtenus sont plus ou moins collants et suffisamment malléables pour subir certaines opérations de transformation habituelles avant durcissement, notamment préformage en Barwell, calandrage, enduction, connues des techniciens en la matière.

Egalement dans chaque cas, il est conseillé de travailler dans des récipients neutres, facilement nettoyables avec des solvants tels que le trichloréthylène, l'alcool dénaturé et l'acétone. L'idéal consiste à utiliser des récipients et ustensiles en verre ou en acier inoxydable. Lorsqu'on emploie des moules en acier, ceux-ci doivent être protégés par un agent de démoulage qui ne soit pas à base de silicones.

En ce qui concerne, en outre, le matériel de mélangeage, celui-ci doit être choisi de façon à ne provoquer aucun cisaillement pouvant entraîner une destruction de la structure des microbilles de verres creuses: au niveau industriel ce sont notamment les pétrins ouverts qui offrent les meilleures possibilités.

Le fait de pouvoir disposer d'un matériau présentant en combinaison les propriétés d'isolation thermique, de résistance à la température et de souplesse et rigidité variables dans des larges gammes de valeurs, est d'intérêt capital en particulier pour la réalisation de revêtements du corps et/ou des parties de missiles, lesquels revêtements sont fabriqués actuellement soit en métal, soit en matériaux composites, notamment à l'aide de tissus de fibres de carbone ou «Kevlar» fixées dans une matrice de résine appropriée, en particulier de résine époxy.

Or, l'augmentation brutale de température de ces revêtements due à la grande vitesse des missiles, qui – nous le répétons – peut atteindre facilement 3 000 Km/h, induit des dilatations du corps du missile et, de toutes façons, de ses parties vitales, qui sont à l'origine de fissurations et de cassures dans les revêtements de protection, qui sont donc incapables d'accomplir ce rôle protecteur.

On comprend donc aisément que, si le matériau d'isolation thermique destiné au revêtement des parties vitales d'un missile, est capable de résister aux températures élevées et en même temps est un matériau souple, celui-ci peut suivre les déformations desdites parties vitales du missile sans que l'isolation thermique et la résistance aux hautes températures soient compromises.

L'avantage est encore plus grand si, en plus de tout cela, le matériau est renu totalement ininflammable.

Ci-après sont indiqués des exemples non limitatifs de réalisation du matériau isolant conforme à l'invention qui, – comme déjà anticipé plus haut – indiquent (de manière non limitative) les proportions avec lesquelles les différents composants entrent dans le mélange, référées à 100 parties en poids (p) du produit de base préalablement catalysé ou non, à savoir de résine ou d'élastomère, de silicones liquides, respectivement.

Exemple 1
– Matériau isolant rigide ignifugé
    100 p de résine de silicones catalysée
     36 p de produit ignifigueant en poudre
     82 p de microbilles de verres creuses
    Propriétés obtenues:
    · dureté égale à 48 Shore D
    . conductivité thermique $\lambda_{39°C} \cong 120\,mW/m\cdot K$
    . densité relative $\cong 0,45$
Le matériau de cet exemple s'insère dans la classification selon la norme FAR 25 comme étant résistant à la flamme et résistant au feu.

Exemple 2
– Matériau isolant rigide partiellement ignifugé et à faible densité
    100 p de résine de silicones catalysée sous forme liquide
     18 p de produit ignifugeant en poudre
    120 p de microbilles de verre creuses
Propriétés obtenues:
    . dureté égale à 30 Shore D
    . conducitivité thermique $\lambda_{39°C} \cong 75\,mW/m\cdot K$
    . densité relative $\cong 0,32$
Le matériau de cet exemple s'insère dans la classification selon la norme FAR 25 comme étant résistant à la flamme et résistant au feu.

Exemple 3
– Matériau isolant souple partiellement ignifugé
    100 p d'élastomère de silicones sous forme liquide préalablement catalysé
     15 p de produit ignifugeant en poudre
     25 p de microbille de verre creuses
Propriétés obtenues:
    . dureté égale à 72 Shore A
    . conducitivité thermique $\lambda_{38°C} \cong 194\,mW/m\cdot K$
    . densité relative $\cong 0,56$
Le matériau de ce troisième exemple s'insère dans la classification selon la norme FAR 25 comme étant résistant au feu.

Exemple 4
– Matériau isolant souple non ignifugé
    100 p d'élastomère de silicones sous forme liquide préalablement catalysé
     50 p de microbilles de verre creuses
Propriétés obtenues:
    . dureté égale à 74 Shore A
    . conductivité thermique $\lambda_{38°C} \cong 117\,mW/m\cdot K$
    . densité relative $\cong 0,40$

Exemple 5
– Matériau isolant rigide
Le matériau isolant de base présente la même formule indiquée sous l'exemple 1.

On réalise une structure sandwich ou stratifiée comportant entre deux couches externes, obtenues à partir de ce matériau de base, une feuille de papier ou un buvard de silice qui améliore les propriétés déjà bonnes d'isolation thermique du matériau isolant de base: $\lambda \cong 77\,mW/m\cdot K$.

La cohésion de l'ensemble a lieu pendant le durcissement.

Exemple 6
– Matériau isolant rigide renforcé mécaniquement
Le matériau isolant de base présente la même formule indiquée sous l'exemple 1.

Les faces externes du produit final obtenu à partir de ce matériau de base sont protégées par un tissu de verre solidarisé par adhésion structurale pendant le durcissement dans un moule. Dans ce cas, le coefficient de conductivité thermique du produit final est d'environ 82 mW/m·K.

Les exemples illustratifs peuvent être multipliés en associant au produit de base des tissus de même nature que les précédents (à savoir de verre et de silice notamment) ou de nature différente, notamment tissus de «Kevlar» ou de carbone, se présentant non seulement sous forme de feuille, mais également de mat, molleton et buvard par exemple.

En ce qui concerne en particulier l'emploi de tissus de «Kevlar» ou de carbone, ceux-ci sont préimprégnés, notammênt à l'aide de résines époxy ou phénoliques, avant de les appliquer sur une face d'une pièce préalablement moulée et réalisée à partir du matériau de base: la solidarisation entre cette pièce moulée et le tissu de protection a lieu sous l'effet de la température dans un deuxième moule.

De façon alternative, on peut solidariser ladite pièce moulée et ledit tissu de protection à l'aide d'un adhésif, minéral ou organique, résistant aux hautes températures.

En général, lorsqu'on emploie des élastomères de silicones liquides on peut obtenir facilement, après durcissement, un produit final dont la dureté Shore varie entre 30 et 90 Shore A; tandis que, lorsqu'on utilise des résines de silicones liquides, la dureté Shore du produit final peut facilement être comprise entre 40 et 50 Shore D.

Ci-après sont indiquées les proportions préférées, mais non limitatives, de microbilles de verre creuses et de produit ignifugeant qui interviennent dans la composition du matériau isolant conforme à l'invention, rigide ou souple, lesquelles proportions sont référées à 100 parties en poids (p) de produit de base (résines ou élastomères, respectivement):

– proportion de microbilles dans un matériau isolant rigide:
. entre 10 à 120 p, sans produit ignifugeant
. entre 10 à 100 p, avec produit ignifugeant

– proportion de microbilles dans un matériau isolant souple:
. entre 10 à 80 p, sans produit ignifugeant
. entre 10 à 50 p, avec produit ignifugeant

– proportion de produit ignifugeant dans un matériau isolant rigide:
. entre 0 à 60 p

(en augmentant ultérieurement la proportion de produit ignifugeant on n'augmente pas la résistance au feu du matériau final, mais on perd en qualité de cohésion: le matériau devient très cassant et friable)

– proportion de produit ignifugeant dans un matériau isolant souple:
. entre 0 à 30 p.

Il y a en outre lieu de signaler que le mélange isolant et éventuellement (de préférence) ignifugé, conforme à l'invention, peut être utilisé non seulement pour réaliser des panneaux (ou plaques), mais également pour réaliser des pièces moulées, ainsi que des tubes, des profilés. On peut envisager aussi d'enduire de ce mélange des tissus, notamment des sièges, pour les rendre ininflammables, et de réaliser des contrecollages sur des supports métalliques ou stratifiés.

La liste des applications possibles du matériau syntactique selon l'invention n'est pas évidemment exhaustive, étant donné que plusieurs industries sont concernées, notamment dans tous les cas où on a besoin d'un produit isolant capable de résister aux hautes températures (et éventuellement aussi au feu) tout en conservant ses propriétés isolantes. Il va de soi que le choix du matériau conforme à la présente invention s'impose a fortiori lorsque la réduction du poids final de la structure protégée revêt une importance primordiale.

A titre indicatif les industries susceptibles d'être intéressées sont les suivantes:
– industrie aéronautique,
– industrie pétrolière (notamment pour la protection antifeu des plateformes de production dites «off-shore» et l'isolation thermique des tuyauteries de liaison entre ces plateformes et les puits de production),
– industrie du bâtiment, et
– industrie de l'automobile.

**Revendications**

1. Matériau d'isolation thermique du type syntactique, comportant une charge de microbilles de verre creuses distribuées dans une matrice à base d'une matière liquide à l'état initial, à savoir, avant réticulation, et à la température ambiante, et destiné à être utilisé à des températures d'au moins 400 °C, lequel matériau est caractérisé en ce que la matrice liquide, qui sert de liant pour ladite charge de microbilles creuses, est constituée par un élastomère ou une résine de silicones utilisés tels quels, à savoir sans solvant, suivant que l'on désire après réticualtion un produit final solide souple ou rigide, respectivement, le degré de souplesse et de rigidité étant dans les deux cas de produit souple et de produit rigide, respectivement, fonction de la proportion de la charge de microbilles creuses présente dans le mélange.

2. Matériau d'isolation thermique selon la revendication 1, caractérisé en ce que le mélange d'élastomère ou résine de silicones et de microbilles de verre comporte une charge additionnelle, présente en proportion également déterminée, constituée par un composé ignifugeant en poudre contenant de l'eau liée, tel que les hydrates d'alumine et les borates,lequel produit ignifugeant est capable d'assurer l'ignifugation partielle ou totale, selon le dosage, du matériau qui le contient, tout en lui permettant de conserver ses propriétés isolantes jusqu'à une température d'au moins 600 °C.

3. Matériau d'isolation thermique selon l'une quelconque des revendications 1 et 2, caractérisé en ce qu'il comporte une charge supplémentaire en proportion appropriée, constituée par des fibres minérales, telles que les fibres de verre, de silice ou d'alumine, ou organiques, telles que les fibres de carbone.

4. Matériau d'isolation thermique selon l'une quelconque des revendications 1 et 2, caractérisé en ce que, lorsqu'on emploie un élastomère de silicones pour obtenir un produit final souple, la proportion de microbilles de verre creuses présente dans le matériau est comprise entre 10 et 80% en poids d'élastomère, si le produit ignifugeant est absent, et entre 10 et 50% en poids d'élastomère si le matériau comprend également ledit produit ignifugeant.

5. Matériau d'isolation thermique selon l'une quelconque des revendications 1 et 2, caractérisé en ce que, lorsqu'on emploie une résine de silicones pour obtenir un produit final rigide, la proportion de microbilles de verre creuses présente dans le matériau est comprise entre 10 et 120% en poids de résine, sans produit ignifugeant, et entre 10 et 100% en poids de résine avec produit ignifugeant.

6. Matériau d'isolation thermique selon l'une quelconque des revendications 1 et 2, caractérisé en ce que, lorsqu'on emploie un élastomère de silicones, la proportion de produit ignifugeant présente dans le matériau est comprise entre 0 et 30% en poids d'élastomère.

7. Matériau d'isolation thermique selon l'une quelconque des revendications 1 et 2, caractérisé en ce que, lorsqu'on emploie une résine de silicones, la proportion de produit ignifugeant présente dans le matériau est comprise entre 0 et 60% en poids de résine.

8. Matériau d'isolation thermique selon l'une quelconque des revendications 1 à 3, caractérisé en ce que la proportion de fibres, telles que fibres de carbone, de verre, de silice, d'alumine, présente dans le matériau est supérieure à 10%, dans chaque cas.

9. Dispositif d'isolation thermique, caractérisé en ce qu'il se présente sous forme d'une pièce moulée à partir du mélange selon l'une quelconque des revendications 1 à 8, et ayant la configuration d'un panneau, notamment modulaire, ou en général une configuration apte à constituer le revêtement de protection d'un objet ou d'un dispositif a priori quelconque susceptible d'être isolé thermiquement aux hautes températures et d'être rendu également en partie ou totalement résistant au feu.

10. Dispositif d'isolation thermique selon la revendication 9, caractérisé en ce qu'il coopère avec un moyen visant à améliorer ses propriétés mécaniques et/ou isolantes, tel qu'un tissu de fibre de carbone, de verre, de polyarylamides, de silice ou autre, se présentant sous forme appropriée, telle que feuille, mat, molleton ou buvard, permettant d'obtenir une structure stratifiée ou en sandwich.

11. Dispositif d'isolation thermique selon l'une quelconque des revendications 9 et 10, caractérisé en ce que, lorsqu'on utilise un tissu de verre, de carbone, de polyarylamides, celui-ci est appliqué sur au moins une des grandes faces du dispositif, tandis que lorsqu'on utilise un tissu de silice, celui-ci est disposé entre deux couches de matériau isolant selon l'une quelconque des revendications 1 à 9.

Patentansprüche

1. Wärmeisoliermaterial der syntaktischen Art, enthaltend eine Charge aus Glas-Mikrohohlkügelchen verteilt in einer Matrix auf der Basis eines ursprünglich, das heisst vor der Vernetzung und bei Raumtemperatur, flüssigen Materials, dazu bestimmt, bei Temperaturen von mindestens 400 °C verwendet zu werden, dadurch gekennzeichnet, dass die flüssige Matrix, die als Bindemittel für die Charge aus Mikrohohlkügelchen dient, aus einem Siliconelastomeren oder einem Siliconharz besteht, die als solche eingesetzt werden, das heisst ohne Lösungsmittel, und dass je nachdem nach der Vernetzung ein festes, biegsames oder steifes Endprodukt angestrebt wird, der Grad der Biegsamkeit und der Steifigkeit in den beiden Fällen des biegsamen Produktes und des steifen Produktes, Funktion des im Gemisch vorhandenen Anteils der Charge von Mikrohohlkügelchen ist.

2. Wärmeisoliermaterial nach Anspruch 1, dadurch gekennzeichnet, dass das Gemisch aus Elastomeren oder Siliconharz und Glas-Mikrokügelchen eine zusätzliche Charge enthält, die in ebenfalls bestimmtem Anteil vorhanden ist und aus einer flammfestmachenden, pulverförmigen Verbindung besteht, die gebundenes Wasser enthält, wie Tonerdehydrate und Borathydrate, dass das flammfestmachende Produkt fähig ist, den teilweisen oder vollständigen Brandschutz sicherzustellen, entsprechend der Dosierung des Materials, das es enthält, und diesem dabei ermöglicht, seine Isoliereigenschaften bis zu einer Tempertaur von mindestens 600 °C beizubehalten.

3. Wärmeisoliermaterial nach einem der Ansprüche 1 und 2, dadurch gekennzeichnet, dass es eine zusätzliche Charge in geeignetem Anteil enthält, die aus Mineralfasern, wie Glasfasern, Kieselsäurefasern oder Tonerdefasern, oder aus organischen Fasern wie Kohlenstoffasern besteht.

4. Wärmeisoliermaterial nach einem der Ansprüche 1 und 2, dadurch gekennzeichnet, dass, wenn man ein Siliconelastomeres verwendet, um ein biegsames Endprodukt zu erhalten, der im Material vorhandene Anteil an Glas-Mikrohohlkügelchen 10 bis 80 Gew.-% des Elastomeren ausmacht, wenn kein flammfestmachendes Produkt vorhanden ist, und 10 bis 50 Gew.-% des Elastomeren, wenn das Material auch das flammfestmachende Produkt enthält.

5. Wärmeisoliermaterial nach einem der Ansprüche 1 und 2, dadurch gekennzeichnet, dass, wenn man ein Siliconharz verwendet, um ein starres Endprodukt zu erhalten, der Anteil an im Material vorhandenen Glas-Mikrohohlkügelchen 10 bis 120 Gew.-% des Harzes ohne flammfestmachendes Produkt, sowie 10 bis 100 Gew.-% des Harzes mit flammfestmachendem Produkt ausmacht.

6. Wärmeisoliermaterial nach einem der Ansprüche 1 und 2, dadurch gekennzeichnet, dass, wenn man ein Siliconelastomeres verwendet, der Anteil an im Material vorhandenem, flammfestmachenden Produkt 0 bis 30 Gew.-% des Elastomeren ausmacht.

7. Wärmeisoliermaterial nach einem der Ansprüche 1 und 2, dadurch gekennzeichnet, dass, wenn man ein Siliconharz verwendet, der Anteil an im Material vorhandenem, flammfestmachenden Produkt 0 bis 60 Gew.-% des Harzes ausmacht.

8. Wärmeisoliermaterial nach einem der Ansprüche 1 bis 3, dadurch gekennzeichnet, dass der Anteil an im Material vorhandenen Fasern, wie Kohlenstoff-, Glas-, Kieselsäure- und Tonerdefasern, in jedem Falle mehr als 10% ausmacht.

9. Wärmeisoliervorrichtung, dadurch gekennzeichnet, dass sie als ein, ausgehend von dem Gemisch nach einem der Ansprüche 1 bis 8, geformter Körper vorliegt und die Gestalt einer Platte, vor allem einer bausteinartigen Platte, aufweist oder allgemein eine Gestalt, die geeignet ist, die Schutzverkleidung eines/einer beliebigen Gegenstandes oder Vorrichtung auszumachen, die geeignet ist, bei hohen Temperaturen wärmeisoliert und ebenfalls teilweise oder vollständig feuerfest gemacht zu werden.

10. Wärmeisoliervorrichtung nach Anspruch 9, dadurch gekennzeichnet, dass sie zusammenwirkt mit einem Mittel, das ihre mechanischen und/oder isolierenden Eigenschaften verbessern soll, wie ein textiles Flächengebilde aus Kohlenstoff-, Glas-, Polyarylamid-, Kieselsäurefasern oder anderen Fasern, und das in geeigneter Form vorliegt, wie Folie, Matte, Molton oder Löschblatt, mit dem ein Schichtaufbau oder ein Sandwichaufbau erzielt werden kann.

11. Wärmeisoliervorrichtung nach einem der Ansprüche 9 und 10, dadurch gekennzeichnet, dass, wenn man ein flächiges Textilmaterial aus Glas, Kohlenstoff oder Polyarylamiden verwendet, dieses auf mindestens eine der grossen Seiten der Vorrichtung aufgebracht ist, während, wenn man ein flächiges Textilmaterial aus Kieselsäure verwendet, dieses zwischen zwei Lagen Isoliermaterial nach einem der Ansprüche 1 bis 9 angeordnet ist.

## Claims

1. A thermally insulating material of the syntactic type comprising a fill of hollow glass microbeads distributed within a matrix based on a material which is liquid in the initial state, i.e. prior to cross-linking, and at ambient temperature, which material is intended to be used at temperatures of at least 400 °C and is characterized in that the liquid matrix which serves as a binder for said fill of hollow microbeads is constituted by a silicone elastomer or resin respectively, used a such, i.e. without a solvent, depending on whether it is desired that the solid final product after cross-linking is flexible or rigid respectively, with the degree of flexibility of stiffness both in the flexible product case and in the rigid product case being a function of the proportion of hollow microbead filler present in the mixture.

2. A thermally insulating material according to claim 1, characterized in that the mixture of glass microbeads and silicone elastomer or resin includes a further filler likewise present in determined proportion and constituted by a fire-retardant compound in powder form containing bound water, such as borax and alumina hydrates, which fire-retardant product is capable of providing total or complete fire retarding for the material which contains it, depending on its concentration, while nevertheless allowing the material to retain its insulating properties up to a temperature of at least 600 °C.

3. A thermally insulating material according to claim 1 or 2, characterized in that it includes an appropriate proportion of an additional filler constituted by inorganic fibers such as glass fibers, silica fibers or alumina fibers, or of organic fibers such as carbon fibers.

4. A thermally insulating material according to claim 1 or 2, characterized in that when a silicone elastomer is used in order to obtain a flexible final product, the proportion of hollow glass microbeads present in the material lies between 10% and 80% by weight of the elastomer, if there is no fire retardant, and between 10% and 50% by weight of the elastomer if the material also includes said fire retardant.

5. A thermally insulating material according to claim 1 or 2, characterized in that when a silicone resin is used to obtain a rigid final product, the proportion of hollow glass microbeads present in the material lies between 10% and 120% by weight of the resin when there is no fire retardant and between 10% and 100% by weight of the resin when fire retardant is included.

6. A thermally insulating material according to claim 1 or 2, characterized in that when a silicone elastomer is used, the proportion of the fire retardant present in the material lies between 0% and 30% by weight of the elastomer.

7. A thermally insulating material according to claim 1 or 2, characterized in that when a silicone resin is used, the proportion of fire retardant present in the material lies between 0% and 60% by weight of the resin.

8. A thermally insulating material according to any one of claims 1 to 3, characterized in that the proportion of fibers such as carbon fibers, glass fibers, silica fibers, or alumina fibers present in the material is greater than 10%, in each case.

9. A thermally insulating device characterized in that it is in the form of a part molded from a mixture according to any one of claims 1 to 8, and having the configuration of a panel, in particular a modular panel, or in general any configuration suitable for constituting a protective coating for an arbitrary device or object suitable for being thermally insulated against high temperatures and also for being made partially or completely fire resistant.

10. A thermally insulating device according to claim 9, characterized in that it co-operates with means for improving its insulating and/or mechanical porperties, such as a fabric of carbon fibers, glass fibers, polyarylamide fibers, silica fibers, or other fibers, said device being in appropriate form such as a sheet, a mat, a molleton fabric, or a blocking fabric, making it possible to obtain a stratified or sandwiched structure.

11. A thermally insulating device according to claim 9 or 10, characterized in that when a fabric of glass, carbon, or polyarylamide fibers is used, the fabric is applied at least to one of the large faces of the device, whereas when a fabric of silica fibers is used the fabric is disposed between two layers of insulating material according to any one of claims 1 to 9.